# EUROPEAN PATENT SPECIFICATION

(11) **EP 2 100 310 B1**
(45) Date of publication and mention of the grant of the patent: **17.10.2018**
(21) Application number: 07824778.0
(22) Date of filing: 03.12.2007
(51) Int. Cl.: G21B 1/19, G21G 1/06, G21G 1/10, G21F 9/28, G21F 9/30

(54) **METHOD AND APPARATUS FOR TRANSFORMING RADIOACTIVE MATERIAL INTO LESS RADIOACTIVE PRODUCTS**
VERFAHREN UND VORRICHTUNG ZUM UMWANDELN VON RADIOAKTIVEM MATERIAL IN WENIGER RADIOAKTIVE PRODUKTE
PROCÉDÉ ET APPAREIL DESTINÉS À TRANSFORMER DU MATERIAU RADIOACTIF DANS DES PRODUITS MOINS RADIOACTIFS

(30) Priority: 04.12.2006 GB 0624203
(43) Date of publication of application: 16.09.2009
(73) Proprietor: Sturt, Alan Charles, Guildford, Surrey GU1 2SX (GB)
(72) Inventor: Sturt, Alan Charles, Guildford, Surrey GU1 2SX (GB)
(74) Representative: Robson, Aidan John
(86) International application number: PCT/GB2007/004620
(87) International publication number: WO 2008/068466

(56) References cited:
- EP-A- 0 099 946
- WO-A-03/098640
- WO-A-2006/015864
- WO-A2-02/103709
- GB-A- 656 398
- US-A1- 2002 172 317
- BAO-AN LI: "Uranium on uranium collisions at relativistic energies", ARXIV.ORG, CORNELL UNIVERSITY LIBRARY, 201 OLIN LIBRARY CORNELL UNIVERSITY ITHACA, NY 14853, 12 October 1999 (1999-10-12), XP080670040, DOI: 10.1103/PHYSREVC.61.021903

## Description

### Field of the Invention

This invention relates to a method and apparatus for reducing the radioactivity of a particle.

### Background of the Invention

There is currently no known process for accelerating the decay of radioactivity in a material. Presently, the only way of handling waste radioactive materials has been to store them until the natural process of decay renders them safe. This can take a century, a millennium or even longer with all the costs and risks which that incurs.

Radioactivity is caused by an unstable configuration of nucleons (protons and neutrons) in a nucleus, which may result from an excessive or deficient number of neutrons relative to the number of protons in the nucleus. Radioactive decay is when such an unstable nucleus spontaneously shifts to a more stable configuration. This shift causes the emission of particles and/or electromagnetic radiation. Particles commonly emitted are alpha-particles which are the extremely stable nuclei of helium atoms, or beta-particles, which are electrons. Emitted radiation is commonly gamma-radiation, which has a very high frequency. All emissions from radioactive substances pose a potential health threat, but gamma-radiation is particularly dangerous.

When the transition of a nucleus to a more stable form occurs, it takes place instantaneously, but it happens independently in each nucleus. There is also a delay between the formation of the radioactive nucleus and its decay which may range from less than a microsecond to millions of years. Moreover the length of the delay is different for each individual nucleus, even within the same species. The result is that the radioactivity of a mass of radioactive material decays exponentially over a period of time which may be very long, and to all intents and purposes may never reach completion.

The process of decay is normally described by the time taken for half of each species of radioactive atom in a mass to decay, the half-life, a parameter which is very reproducible in spite of the independent action of individual nuclei, because each nucleus of the radioactive species has the same probability of decaying at any particular time, and because there are so many of them in macroscopic quantities of radioactive materials. Particles and radiation are therefore emitted by the mass throughout the whole of its radioactive life, and diminish only at the same exponential rate as radioactive nuclei shift to more stable forms.

Thus the rate of decay of radioactive materials, once formed, is determined forever by natural processes. The result globally is a large and growing quantity of hazardous radioactive waste from industrial and other processes which requires isolation and secure storage to prevent its misuse and contamination of the environment. This may have to continue for a thousand years or more for each year's production of radioactive waste.

Embodiments of the invention transform radioactive materials into less radioactive products in a controlled way, substantially instantaneously and on demand, so as to obviate the need for special storage.

### Summary of the Invention

According to a first embodiment of the present invention there is provided a method for reducing the radioactivity of a particle as set out in claim 1. Preferably the collision mass then condenses to form helium gas or/and hydrogen gas.

Preferably, the first or second particles comprise a mixed species of particles. This has the advantage that radioactive waste comprising a number of different elements or/ and a number of different isotopes can be split up into atoms for acceleration without first having to separate the different elements or isotopes from each other. Preferably, one or more of the nuclei comprises uranium or plutonium or one or more of their isotopes.

Preferably, a fast moving particle detector detects any fast moving particle(s) within the housing.

Preferably, a radioactive particle detector detects any radioactive particle(s) within the housing.

Preferably, a portal is opened if the fast moving particle detector detects fast moving particle(s) and the detector activates electromagnetic diversion means to divert the fast moving particle(s) to a particle storage ring.

Preferably, a portal is opened if the radioactive particle detector detects radioactive particle(s) and the detector activates electromagnetic diversion means to divert the radioactive particle(s) to a particle storage ring.

Preferably, one or more of the particles contained within the particle storage ring are diverted to the particle accelerator to be re-collided with one or more second particle(s).

Reducing the radioactivity of a nucleus means reduce the average number of particles that are emitted from a nucleus in a predetermined time period. Activity of a radioactive source is measured in Becquerel (Bq), and is the amount of material which produces one nuclear decay per second. For example, the radioactive particles emitted from a nucleus can include an alpha particle (a helium nucleus with 2 neutrons and 2 protons), a beta particle (which is the emission of an electron accompanied by an electron antineutrino as a result of the decay of a neutron in the nucleus of the atom), and gamma rays, which are high energy x-rays. Other radioactive processes are electron capture in which a nucleus may emit a neutrino by capturing one of its own electrons; positron emission in which a nucleus emits a positron along with a neutrino. This is similar to beta decay. Finally, internal conversion may cause radioactivity in which a nucleus in an excited state interacts with a lower shell electron, causing the electron to be emitted from the nucleus.

Preferred embodiments of the invention destroy the structure of a heavy nucleus by colliding a first particle, an ion accelerated, to a high speed with a second (heavy) nucleus at a velocity which is substantial comparable to the speed of light. The product of collision, here called the collision mass, is a coherent entity composed largely or completely of fundamental particles depending on the energy of impact and the structures of the nuclei. The fundamental particles preferably comprise protons and neutrons released from the structure of the nucleus. The ion is collided with another heavy particle, ion, plasma or atom at velocities which are comparable to, or a fraction of, the speed of light. At least one of the particles comprises a radioactive element or isotope. Isotopes are other forms of an element which has the same number of protons, but different numbers of neutrons.

By reducing radioactivity of one or both of the particles, there is no cost of very long term storage of radioactive waste and plant, such as arises from nuclear fission reactors. It is a further advantage of the process of this invention that it is fail-safe, because if the stream of heavy ions fails, the process stops.

Embodiments of the invention use input materials which are can be any radioactive particle, does not produce harmful by-products, does not use or produce radioactive materials and does not add to greenhouse gases.

In all embodiments, the first particle is accelerated to a speed substantially comparable to the speed of light. Preferably the speed of the first particle is approximately one third the speed of light, about 1*10⁸ms⁻¹. Preferably, the second particle is accelerated to a the speed of approximately one third the speed of light, about 1*10⁸ms⁻¹. Preferably, the first or second particles or both particles comprise a heavy ion. Preferably, the accelerator comprises a Van de Graaff generator. Preferably, the accelerator comprises a synchrotron accelerator.

### Brief Description of the Drawings

Embodiments of the invention will now be described in detail by way of example only with reference to the accompanying drawings, like reference numbers indicating like features, in which:
Figure 1 is a schematic diagram showing the formation of a single collision mass of nuclear dimensions by the collision of two ions, preferably heavy ions travelling at a velocity close to the speed of light;
Figure 2 is a schematic diagram showing the formation of a single collision mass of nuclear dimensions by the collision of two ions, preferably heavy ions travelling at a velocity close to the speed of light according to another embodiment of the invention;
Figure 3 is a schematic diagram in two dimensions of a single collision mass formed by the collision of two ions at a velocity close to the speed of light;
Figure 4 is a schematic diagram of the capture of an ion, atom or molecule by the collision mass;
Figure 5 is a flow diagram of the process for reducing the radioactivity of a particle;
Figure 6 is a schematic diagram showing the process for reducing the radioactivity of a using a single particle accelerator;
Figure 7 is a schematic diagram showing the process for reducing the radioactivity of a particle in which a carrier gas is introduced;
Figure 8 is a schematic diagram of the embodiment of figure 6 further comprising a heat exchanger;

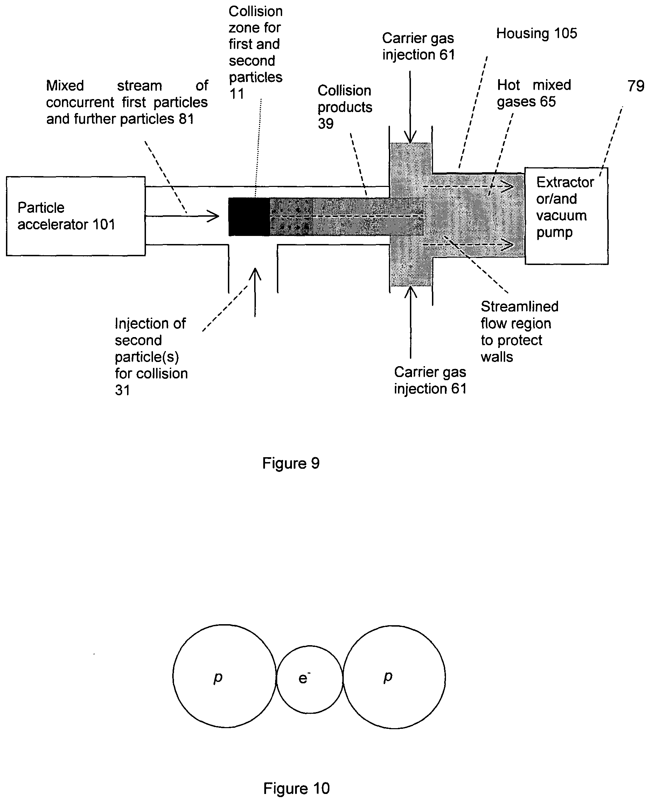

Figure 9 is a schematic diagram of the embodiment of figure 6 in which both light ions and heavy ions for collision are introduced together travelling at a velocity close to the speed of light in the substantially the same direction, preferably but not necessarily using the same accelerator;
Figure 10 is a schematic diagram of a deuterium nucleus

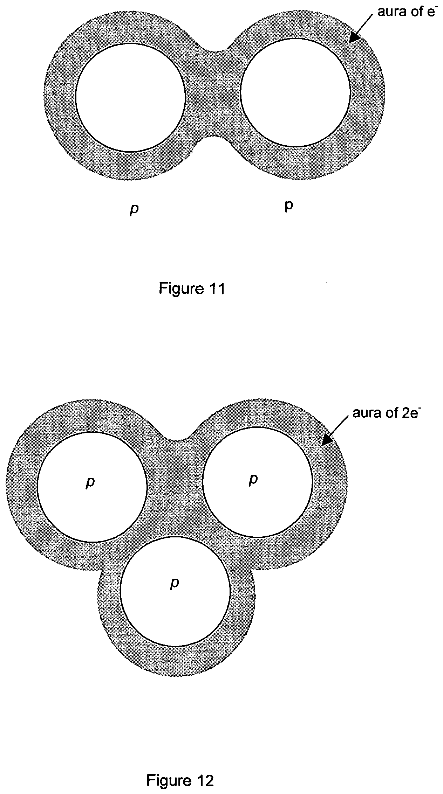

Figure 11 is a schematic diagram of a deuterium nucleus with distributed negative charge; and
Figure 12 is a schematic diagram of a tritium nucleus with distributed negative charge.

### Detailed Description of the Preferred Embodiments of the Invention

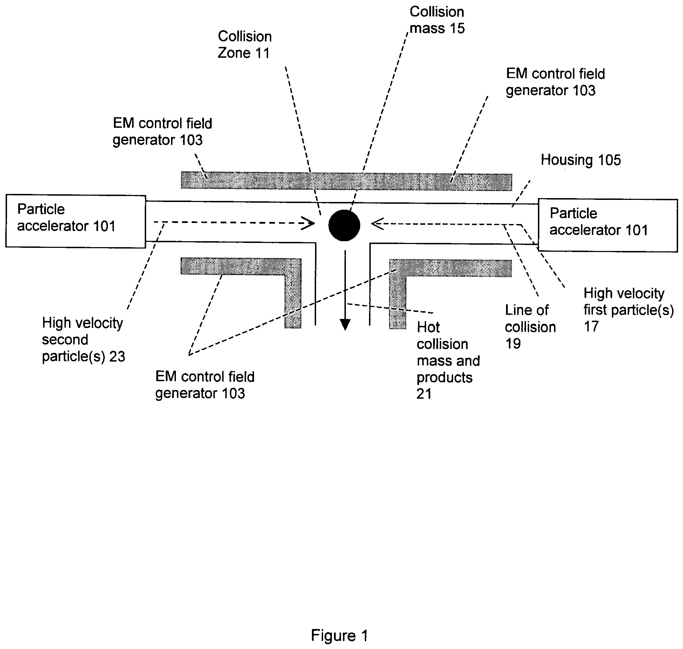

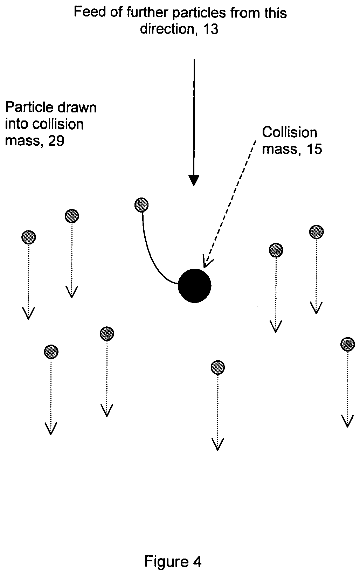

Referring to figures 1-3, and the flow chart of figure 4, a particle accelerator 101 or other accelerator is used to accelerate one or more first particle(s), preferably ion(s) or heavy ion(s) 17 to a first velocity with a high speed component which is preferably a speed comparable to the speed of light, step 41. This is performed under a partial vacuum. The partial vacuum must be sufficiently low pressure so that the particles can be accelerated to the required speeds. The accelerator 101 or second accelerator is also used to accelerate one or more second particle(s), preferably ion(s) or heavy ion(s) 23 to a second velocity with a high speed component which is preferably a speed of about a third of the speed of light, step 45. Once again, this is performed under a partial vacuum.

The trajectories of the two accelerate particles is arranged such that when the particles meet in a collision zone 11, the directions of the velocities of the first and second particle(s) are substantially opposite. Therefore the target second particle(s) 23 takes the form of one or more particle(s) 23 with a high speed and a direction opposite to that of the direction of the other first particle(s) 17. Preferably both particles have a speed which is about a third of the speed of light, to increase the impact of collision.

The particle(s) 17 is then collided in the collision zone or colliding section (collider) of the apparatus with the second one or more second particles 23, preferably a heavy particle 23 to form a coherent entity or collision mass, 15. The collision zone is located within a housing allowing the trajectories of the particles to be controlled by electromagnetic (EM) fields. These EM fields may comprise electric or magnetic fields or both, and are generated by EM control field generators 103. Furthermore, a partial vacuum is maintained within the housing so that particles can be accelerated and collided without interference from unwanted particles. The partial vacuum is maintained by vacuum pumps (not shown) known to those skilled in the art.

The collider is the section of apparatus in which collision takes place. This is shown as the collision zone 11 in figure 1. This can be the part of the apparatus where the two accelerated particles collide.

Where opposing particles are collided, both particles comprise ions 17, 23 so that they can be accelerated using a particle accelerator 101 along a line of collision 19 using techniques known to those skilled in the art, for example using electromagnetic fields, steps 41, 45. Both particles can be accelerated using a single accelerator and then fed into the collision zone at the appropriate time or alternatively two accelerators can be used so that each particle is accelerated by its own accelerator.

Particle accelerators which may be used are those capable of particles to velocities preferably greater than a third of the speed of light. Suitable accelerators are linear accelerators and synchrotrons, in which electric and magnetic fields accelerate and control streams of ions. The accelerator could comprise the Relativistic Heavy Ion Collider at Brookhaven, or the Super Hadron Collider at Geneva. However other less powerful colliders may be used which accelerate up to about a third of the speed of light for example, about ∼1×10⁸ms⁻¹.

Successive stages of acceleration may be used, and one accelerator may provide the input for another. Such an arrangement may include a Van de Graaff electrostatic generator. Ions progressively lose more electrons as they pass through the stages of acceleration. The greater the mass of the ion, the lower the speed needed to produce a suitable collision mass, which requires less capital investment and running costs.

When the accelerated particles are, for example, streams of ions or single ions, synchrotrons with intersecting storage rings and facilities for reversing flows can be used. Particles may pass through several stages of boosters before reaching storage rings, such as a linear accelerator, a booster synchrotron or an alternating gradient synchrotron individually or in series. Particles may be injected from the storage rings as required for collision at points where the rings cross. This allows the particles to collide, and provides complete control over the entire process of heat generation.

The energy of collision of two particles 17, 23 depends on the momentum of the particles, which is proportional to their mass and velocity. It is their change of momentum on impact which smashes the structure of the ions. One of the two particles 17, 23 must comprise a radioactive particle. A range of particles may be used in the collision stage to produce optimum properties for engineering and physics. Examples of heavy atoms or ions which may be used as the first and second particles are copper, gold, platinum, silver, uranium, lead iron, plutonium and uranium. Rare earths (elements of the lanthanide series of the periodic table with atomic numbers from 57 to 71 inclusive) may also be used. The ions need to be easy to make and stable enough to accelerate to the desired velocities. Elements with an atomic number greater than argon (atomic number 18) may be suitable for the collision process. An important criterion is the nature of the collision product, which needs to be coherent enough to expel all electrons from neutrons in the collision mass. It may also attract light ions by gravitational and electrostatic attraction. Such coherent entities have already been obtained with copper, gold and lead.

It is desirable to reduce the nuclei to protons, electrons and alpha particles at as low a temperature as possible in order to limit the power needed to accelerate the ions. The energy input for acceleration increases hyperbolically as the ion approaches the speed of light. Much of the energy input is wasted as electromagnetic emissions, which does not affect the particle's kinetic energy. Thus even a small reduction in velocity can save a considerable amount of power input, as long it forms a collision mass which has destroyed the structure of the nuclei. The most energy efficient process is therefore to use the heaviest available ion at the lowest possible speed to achieve a collision mass capable of fusing particles which are introduced into it. Accelerating a particle to a velocity of about a third of the speed of light consumes only a few percent of the power needed to accelerate to velocities close to the speed of light. Then if two particles are collided with opposing velocities, each at a speed of a third of the speed of light, the effective speed of one of the particles viewed from the reference frame of the other particle is approximately 0.6c, where c is the speed of light, using relativistic addition of velocities.

These particles may be controlled by electric or magnetic fields or both so that they can be introduced into the collision mass. Another advantage of a lower velocity is that it facilitates the orientation of trajectories, which is important for arranging collisions. The following description refers to the first and second particles being heavy ion(s). However, other particles may be used as previously described. When the first and second particles approach each other, there are three possibilities that may occur. First, a head on collision between the two particles may occur in which most of the structure of the nuclei is destroyed. Secondly, there may be no collision, and thirdly, a partial collision may occur in which fragments of the nuclei are produced which may in themselves be radioactive.

Colliding the two particles destroys the nuclear structure of the particles. Constituents of the collision mass are formed by the decomposition of the nucleus into neutrons and protons and electrons.

The neutron as a species of nucleon is formed by the reaction of a proton with an electron at extremely high temperatures, and the resulting nucleon is stable down to low temperatures, whence the nuclei of all atoms in the periodic table. Since the effective temperature within a collision mass is extremely high for a very short time, it might appear that conditions favour the formation of neutrons rather than their decomposition, as described above. However, neutrons are also known to decompose in a matter of minutes at low temperatures, including room temperature, to give protons and electrons. The difference is that neutrons as nucleons derive their stability from interaction with other nucleons in the nucleus. Neutrons which are free i.e. expelled from nuclear structures are unstable and readily decompose.

The process of collision separates neutrons from their nuclear structures in exactly the same way as it liberates protons from the nuclear structures in which they are embedded. It is therefore an essential requirement of collision that it should be at sufficiently high velocity and of sufficient energy to cause the separation of neutrons, and so facilitate the decomposition of these free neutrons into electrons and protons. It is the kinetic energy of the fundamental particles in the core of the collision mass which drives the electrons out of the core. It is the opposite charges of the core and the electrons which keep them in association.

An object of the process is to maintain the separation of electrons and protons, so that there is no possibility of neutrons being reformed. This depends on the conditions of cooling. Separation during cooling is facilitated if there are additional protons outside the collision masses but in their vicinity, so that they are able to pick up electrons and form hydrogen atoms, which eventually combine to become hydrogen gas.

In a further embodiment, addition of other nuclei which are sucked into the collision mass and cool the collision mass by distending the collision mass. These are nuclei such as those of hydrogen, deuterium, tritium and lithium. These nuclei do not themselves decompose into fundamental particles, because they will tend to cool the core of the collision mass, so that there is insufficient heat in the core to cause their decomposition. The most stable nucleus is that of helium. The slowing of the cooling rate allows the components of the rest of the collision mass to adopt their most stable configuration and separation. The process terminates when eventually the collision mass dilates and is destroyed.
The net result of all these transformations brought about by collision is very hot hydrogen mixed with a small amount of helium plus very energetic protons, which can be readily neutralised to give yet more hydrogen. It is unlikely that more complex nuclear structures will be able to form under these conditions of low pressure and decreasing temperature.

Heavy radioactive nuclei have excess neutrons, which have to be dealt with as above. Their special requirements are: first, the substantially complete destruction of the nuclear structure into protons and neutrons, because it is not enough just to nudge nucleons into a new nuclear structure as with fusion; and secondly, a large excess of protons external to the collision mass to mop up electrons and inhibit any tendency to reform neutrons.

The net result of such transformations in radioactive materials is that all harmful radioactivity has been destroyed, since there is no longer any material that can support unstable structures, even temporarily.

If any electromagnetic radiation is emitted during the collision, there will not be much of it, because the quantity of radioactive material involved is very small, and it is containable by shielding because it will occur only inside the chamber in which collisions take place.

The radioactive material used in embodiments of the invention is prepared by normal safe chemical procedures such as solution, heating, concentration, distillation and evaporation, so as to leave the radioactive atoms in ionisable form. The material is then evaporated by processes such as heating or laser evaporation to form individual ions for feeding into apparatus such as Van de Graaff generators so that electrons can be stripped out leaving just highly positively charged nuclei. These are then fed into a particle accelerator and accelerated by electromagnetic means to velocities approaching the speed of light.

Such material need not be pure to undergo the process of acceleration and collision; it may be a mixture of radioactive ions, which is much easier to prepare. Radioactive wastes usually contain mixtures of radioactive ions. The only condition is that the nuclei are capable of being destroyed by collision, so as to form a collision mass. Such radioactive nuclei need to be capable of acceleration to the required velocities to attain the necessary momentum and energy in a particle accelerator.

Collision is a stochastic process involving millions of nuclei, and many nuclei may not collide with another nucleus. Embodiments of the invention in which nuclei which do not collide simply pass at high velocity out of the collision zone and are deflected electromagnetically into storage rings where they can be maintained at high velocity for feeding into the collision zone again. This process is facilitated if the opposing streams do not meet exactly head on, because they diverge rapidly from the oncoming stream as soon as they leave the collision zone. Recycling applies to all the apparatus described in the Figures, but is omitted from some in the interests of clarity.

Recycling of radioactive nuclei ensures that all are eventually destroyed.

Collision masses are relatively stationary because of the opposing velocities of the nuclei of which they are formed. Their cores are at extremely high temperatures. They may be steered electromagnetically out of the collision zone, but there are important advantages to be gained by injecting a carrier gas at this point to form a streamlined flow of gas to sweep them out of the collision zone. This avoids corrosion by keeping the hot collision masses from the walls of the apparatus. It cools the product down to temperatures which are manageable in engineering terms. It quenches any process of reforming complex nuclei which may become unstable and radioactive. Finally, it acts as a neutron interceptor, if by chance any neutrons manage to escape destruction. The most effective carrier gas from all points of view is hydrogen.
In one embodiment uranium ions can be destroyed, for example U-235 or U-238. U-235 contains 92 protons and 143 neutrons. If all extranuclear electrons are stripped off using the accelerator, the neutrons will decompose on collision to form 143 protons, which added to the initial 92 protons make 235 protons. Rapidly decreasing temperature and low pressure plus scavenging protons included in the fast stream remove all electrons as hydrogen atoms. The remaining 235 protons are sucked across a negatively charged grid so that they also pick up electrons and form hydrogen atoms. Hydrogen atoms combine rapidly to form molecular hydrogen, especially in the presence of cool streamlined carrier hydrogen gas. Collision reduces these collision products to relatively slow speeds. Nuclei which have not collided remain in the fast stream, and are diverted by electromagnetic means into storage loops.

Fragments of nuclei which have not completely disintegrated are themselves positively charged nuclei, and are also diverted by electromagnetic means into storage loops for recycling as a concurrent stream with the fast stream of radioactive nuclei. It makes for a very mixed stream, but this is unimportant since the only criterion is reduction of radioactivity not analysis.

In another embodiment, a further example is P-238. This nucleus contains 94 protons and 144 neutrons. If all extranuclear electrons are stripped off, there remain ultimately 238 protons to be processed as above.

### Head-on collisions

In a head on collision, each collision of one or more first and second heavy ion(s) produces a collision mass 15 with a high temperature, step 47. The first particle or second particle or both particles may comprise a radioactive ion. On of the particles can comprise a non-radioactive ion. If the colliding particles are of equal mass and velocity, their momenta cancel out, and the entities formed by collision are comparatively stationary in the collision zone 11. If, however, one of the particles has a lower velocity or is stationary at the instant of collision, the momentum of the high velocity heavy ion is imparted to the whole collision mass 15. Further description of the nature of the collision mass is given in the attached appendix, to which reference should now be made. As a result of the collision, substantially all of the neutrons contained within the first or second particles are forced to decay into electrons and protons. This occurs at the instant of collision. Electron antineutrinos are released as a result of the decay. This occurs instantaneously on collision of heavy nuclei and surrounds the remnants of the nuclei. The collision mass comprises mainly protons and electrons since most of the neutrons have decayed into protons and electrons etc, but any structure left it is likely to be in the form of helium nuclei, which are extremely stable. In fact these are stable enough to have a separate existence as alpha-particles. The collision mass is stationary relative to the feeds from the accelerator, or at least moves much more slowly, because of opposing momenta of the two particles. The collision mass is very short lived and rapidly diffuses away into separated electrons and protons. Under the conditions of the process, high vacuum and rapidly falling temperature, separated electrons and protons never again combine to form neutrons, and so their potential for radioactivity is destroyed forever. However, the short-lived concentration of protons in the collision mass exerts much more widespread and longer-lived gravitational and electric effects than nuclear dimensions suggest. These cause it to pull in additional nuclei in the vicinity, if any are present.

In this way, most of these nuclei also disintegrate into protons and electrons and perhaps helium nuclei, but any which survive are likely to be smaller and radioactive.

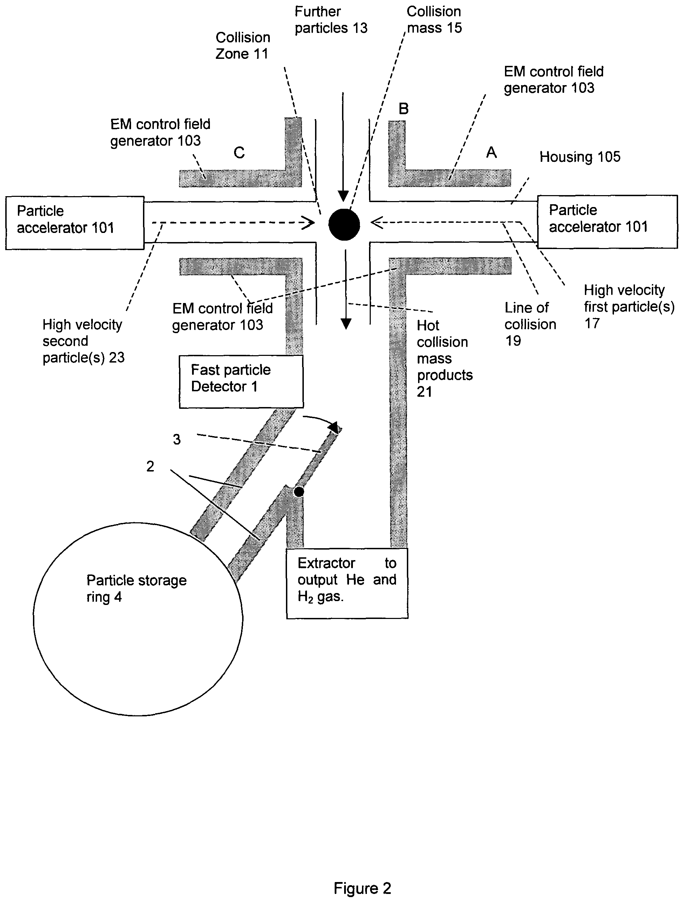

In a further embodiment shown in figure 2, separation of any remaining radioactive nuclei left after the collision is by velocity. Fragments of nuclei which are not destroyed have a much greater velocity than the collision mass, which are in effect stopped dead in their tracks in the collision zone. Radioactive fragments will therefore continue out of the collision zone, and since these fragments are ions, they are diverted by EM fields using EM field generators. These fast moving particles are detected by a fast moving particle detector 1, and if the detector detects one of the particles, then the EM diversion means 2 is activated and a portal 3 is opened to allow the particles, which are usually radioactive to be diverted to (radioactive) particle storage rings 4. Alternatively, or additionally, a radioactive particle detector (not shown in figure 1) can be used to detect such radioactive particles, and this activates the radioactive fragment EM field diversion, where the radioactive particles are contained in the radioactive particle storage ring. In figure 1, only one portal 3 and fast moving particle detector 1 and one set of electromagnetic diversion means 2 is shown. However, if necessary additional fast moving particle detectors, portals and electromagnetic diversion means can be placed at position A, B and C shown in figure 1. Fragments of nuclei which are diverted into the storage ring may be fed back into the collision zone where they may once again collide with another nuclei, as previously described.

The apparatus is exhausted by pumps etc, step 43 which sucks out the slow moving, non radioactive products. It is unlikely that protons and electrons could survive separately in this relatively slow stream of mixed gases, and so they rapidly associate to form hydrogen atoms. As soon as they form hydrogen atoms they are no longer a hazard. They go on to form hydrogen gas. The components of alpha-particles form helium gas by picking up electrons which can be supplied by the walls of the vessel. The mixture which is sucked through the exhaust port therefore consists almost entirely of hydrogen gas and helium gas. Any residual nuclei in the mixture are positively charged and radioactive. These can preferably be filtered off by deposition on a negatively charged metallic grid, which can eventually be removed and dissolved for reprocessing. Any residual radioactive highly charged atoms are filtered off by the charged grid which can be configured so that mainly highly charged nuclei are attracted to it, and the less charged protons pass through the grid since they are of lower charge. Any residual radioactive nuclei will also form atoms in the same way as the protons after they have been attracted to the charged grid. They can then be recycled and reaccelerated for collision once again.

### No collision

In the case where there is no collision between the first and second particles, nuclei which do not collide pass straight through the collision zone at undiminished velocity i.e. they are separated from the products of collision by speed. Particles travelling through the collision zone can be detected as previously described. They can then be diverted into storage rings and fed back at high velocity into the collision process. These can be detected and separated back into the radioactive particle storage ring in the same way as any radioactive fragments in the case of complete collision.

### Partial collisions

Partial collisions produce fragments which are themselves positively charged nuclei. They may also be radioactive. These continue to travel at high velocity relative to the products of head-on collision. They retain enough momentum to continue out of the collision zone. They are detected as previously described, and are diverted by electromagnetic means into storage rings, as previously described. Preferably, they are fed back into the collision zone. Preferably, collisions of heavy nuclei produce collision masses which suck in the smaller nuclei and cause them to disintegrate, producing hydrogen and helium. Smaller nuclei which are not absorbed in this way go round the cycle again. Either they are fast enough to separate electromagnetically, or they are filtered out by a negatively charged grid, dissolved and recycled as above. Protons and electrons are not drawn out by the grid because of their lower charge. The whole mass is deficient in electrons i.e. positive charge.

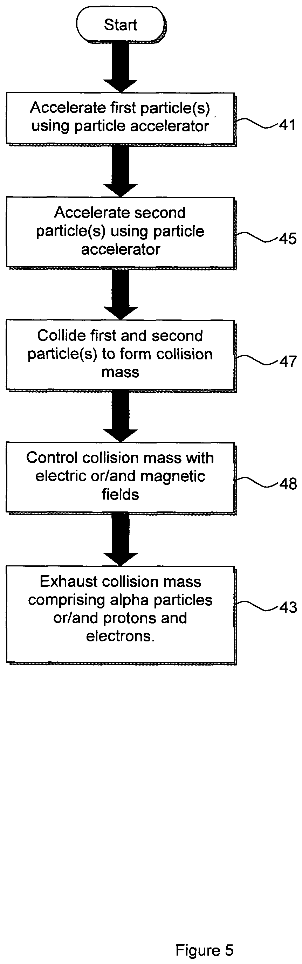

The residence time i.e. the position and duration of stay of the collision mass(es) in the reaction chamber (housing) and lifetime of collision masses are controlled by choice of atomic number of the particles involved and the use of electromagnetic (EM) containment fields generated by an EM control field generator 103, step 48. These fields may comprise electric or magnetic fields or both, and allow for the location of the collision mass within a housing 105 of the apparatus to be controlled, as well as for stabilising the collision mass. The control field generator 103 shown in figures 1 and 5 is schematic only. Those skilled in the art will appreciate that the actual coils and plates necessary to provide the containment fields will be located inside the housing 105 needed to contain the particle(s) accelerated under a partial vacuum. Furthermore, containment fields may be located above and below the collision mass 15, and these are not shown in the figures for clarity. The housing 105 containing the partial vacuum and containing the collision mass and are known to those skilled in the art. It may comprise metal, for example stainless steel tubing, joined together for example using nuts and bolts or/and welding. The force of collision of the one or more first and second particles at velocities which are comparable to the speed of light is sufficient to reduce them to more fundamental particles for example protons and electrons, which cluster together to form a coherent collision mass, as shown in figures 1 and 2. The collision mass is maintained in the collision zone by the use of electric or magnetic fields or both generated by the EM control field generator 103. The collision mass has a surface of expelled electrons 25 which occupy a diffuse boundary 26 between the core 27 and the outside. At the surface are electrons 25 which have been displaced by the energy of the collision, because they are mobile. The positive charges in the core may be more evenly distributed.

Therefore, the collision mass is a coherent entity with a mass which is approximately equal to the combined masses of the colliding heavy atomic species, but substantially devoid of nuclear structure as a result of the energy of the collision. The entity has an effective temperature which may briefly approach that of stellar bodies.

However, collision is in part a random process, and so most first particle(s) 17 pass the second particle(s) 23 without colliding, and so is therefore preferable to use a stream of particles to form one or more collision masses. A stream (plurality) of first ions (rather than a single ion) 17 is preferably accelerated using the particle accelerator 101 and this stream is then preferably incident on a plurality (stream) of second particles, ions, or heavy ions 23 with a velocity which is substantially opposite in direction to that of the first stream of particles. The advantage of using streams of particles or ions is that there is a greater probability of collision of two particles.

In one embodiment, the stream of particles or heavy ions comprises many millions of particles to achieve a sufficient number of collisions. This represents a very small mass of material, because a kilogram contains many billions of heavy ions, which limits the possible extent of any damage to the surrounding apparatus.

If streams of particles or heavy ions are collided with an opposing stream of particles, heavy ions or a stationary particles or heavy atom, ion or particle, the collision masses form in the collision zone 11 as a cloud or "gas". Collision masses remain separate from each other during the process because of electrostatic repulsion.

The collision masses form a cloud because collisions between particles from each stream of particles occur at slightly different locations which leads to a cloud of collision masses. The collision masses are distributed randomly in the cloud of collision masses situated in the collision zone, and each collision mass is of roughly nuclear dimensions and with extremely high temperatures for a short time.

Particles which do not collide continue out of the reaction zone, and are then preferably recycled back into an earlier stage of the process until the nuclei do collide and their structure is destroyed.

Nuclear fusion is defined in the Encyclopaedia of Applied Physics as the amalgamation of a projectile and a target nucleus to form another nucleus. According to this definition, the formation of a collision mass is not nuclear fusion, because a collision mass does not have a unique mass and is not the nucleus of a recognised element of the Periodic Table. As an unstable entity it degenerates into smaller entities, which in embodiments of the invention form protons and electrons with some helium nuclei.

The collision mass(es), formed by the collision of two heavy ions is heavy enough to form an entity with sufficient mass and charge to pull fragments of other nuclei into its interior by gravitational and electrostatic attraction. The charge of the collision mass allows it to be controlled and stabilised by electric and magnetic fields 48.

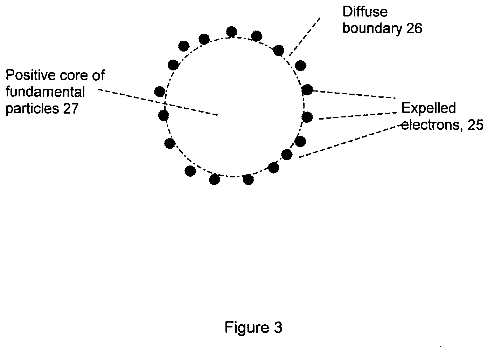

Light ions, atoms and molecules are generally those with atomic numbers less than that of argon which has an atomic number of 18. Light ions, atoms or molecules may be fed separately. The further particles help to cool the protons and electrons and may disintegrate themselves into protons and electrons In this way, additional further particles, preferably light ions etc may be introduced or fed into the collision zone. A proportion 29 of the additional further particles are drawn into the collision mass on a random basis by electrostatic and gravitational attraction, together with fragments of heavy ions from other collisions, as shown in figure 3. The zone of attraction of a collision mass is much greater than nuclear dimensions because of these electrostatic and gravitational forces.

Preferably in one embodiment, radioactivity is reduced by the destruction of many particles in many such collision masses forming a cloud or gas of collision masses. The cloud of collision masses are contained and stabilised by electric and magnetic fields.

Even if one collision mass is formed or a cloud of collision masses is formed, the process of forming the collision mass of protons and electrons is controlled by regulating the feed rate of further particles13. This may be continuous or intermittent.

Methods of feeding the further, preferably light particles 13 are known to those skilled in the art and are not shown in the figures, and comprise thermal evaporation and laser techniques, or a stream of plasma. Laser beams can be used as concentrated heat sources to cause evaporation when they are applied to bulk materials.

The temperature increase produced by each collision and subsequent destruction of radioactive particles or elements is temporary, and so in one embodiment, a continuous process for manufacturing heat requires new collision masses to be produced. Therefore it is preferable to use a stream of heavy ions so that new collision masses can be created using the accelerator. The process can be terminated at any instant by stopping the flow of the stream of particles for example heavy ions into the collision zone. The position of collision masses and the fusion products is controlled by electric or / and magnetic fields generated by the EM control field generator.

Preferably, the collision products and fused particles may then be evacuated using an extractor 79. The extractor may simply comprise further electric or magnetic containment fields which progressively move the products along a housing 105 or tube which can be surrounded by a heat exchange fluid so that heat can be extracted indirectly using a heat exchanger, if necessary. Alternatively a vacuum pump 79 can be used for extraction 21, step 56. In one embodiment, the creation of collision masses is a continuous process by colliding streams of particles. The bulk temperature of the collision masses may controlled by the flow of the collision masses through the feed of the further particles, preferably light ions . Alternatively, the collision masses can be allowed to cool naturally, by convection, conduction and radiation. The streamlined flows are determined by the geometry of the reactor. The more further particles, for example light species which are fed into the collision mass, the more the collision mass cools. In this embodiment, the whole process is analogous to a chemical flow reactor, but with collisions at the nuclear instead of the electronic level. The same considerations of flow rates, residence times, heat transfer and separation techniques are applicable as in chemical engineering practice. The kinetics of the process depend on probabilities of collision, numbers of ions etc just like the molecules of chemical reactions, because the streams are composed of billions of heavy and light ions. There is the possibility of back-mixing as well as plug flow and injection of plasmas of ions of the same or different species. Plug flow is where the reactants flow straight through the reactor and the reaction proceeds as the reactants travel through the reactor. Back mixing is where some of the reactants or resulting products are fed back into the input of the reactor. The stream of ions may also contain different constituent ions. Gases may be injected to improve the streamlining of flows, keep the high temperature plasma and gases from the walls of vessels, minimize losses and introduce chemical reactants to obtain specific effects. The process may preferably be continuous with electromagnetic control of flows, since the species are charged, but it may also be carried out as semi-continuous or batch reactions, which would produce products in bursts.

The other feature of the process according to embodiments of the invention is that, since it has to be carried out in high vacuum, there is an extraction system in the form of vacuum pumps at the output end of the apparatus. This also serves to suck out the reaction products in the form of hot gases, for safe disposal or use .

Figure 5 shows schematic process destroying radioactivity in which the structure of a radioactive nuclei is destroyed by colliding one or more first particle(s), preferably a heavy ion 17 from an accelerator with substantially stationary injected second particle(s), for example, heavy ions 31, atoms or plasma.

Referring to figure 5, a particle accelerator 101 or other accelerator is used to accelerate one or more first particle(s) 17, preferably an ion or heavy ion 17 to a high speed, preferably a speed comparable to the speed of light. This is performed under a partial vacuum. The first particle 17 is then collided in the collision zone 11 or colliding section (collider) of the apparatus with one or more second particle(s), preferably a heavy particle or ion 31 to form a coherent entity or collision mass, 15. This target second particle 31 is stationary or at relatively low speed in the collision zone 11 in which collision takes place. Preferably the first particle(s) have a speed which is comparable to the speed of light, to increase the impact of collision.

The collider is the section of apparatus in which collision takes place. This is shown as the collision zone 11 in figure 5. This can be the part of the apparatus where the first accelerated particle(s) collide with the second substantially stationary particle(s).

This collision destroy the nuclear structure of the accelerated ion, and forms a collision mass of protons and electrons, with the neutrons having decayed into protons and electrons and electron antineutrinos at the time of the collision, as described in the previous embodiment. In one embodiment, the collision mass of protons and electrons is cooled by injecting further particles, preferably light nuclei 13. A stationary cloud of second particles, preferably heavy ions or atoms 31 can be formed from heavy elements by known techniques of gasification by hot wire and laser techniques, which give atomised or substantially atomised particles. This requires less energy than a stream of heavy ions, and allows optimisation of the concentration of heavy atoms in the cloud or gas to increase the chances of suitable collisions. The heavy atomic species and plasma for collision are injected 31 in to the collision zone, 11 for heavy atomic species. The stationary cloud of heavy ions may also take the form of a plasma prepared separately and introduced into the collision zone to facilitate the reaction. Preferably the first particles 17 comprise a stream of accelerated particles and these are incident on a plurality of second particles 31 which are substantially stationary in the collision zone 11. This has the advantage of increased probability of collision, which was explained with reference to previous embodiments. The position and lifetime of the collision mass can be controlled by electric or and magnetic fields generated by an electric or and magnetic (EM) control field generator 103 so the collision mass can be positioned in the housing 105 such that further particles can be introduced into the collision mass.

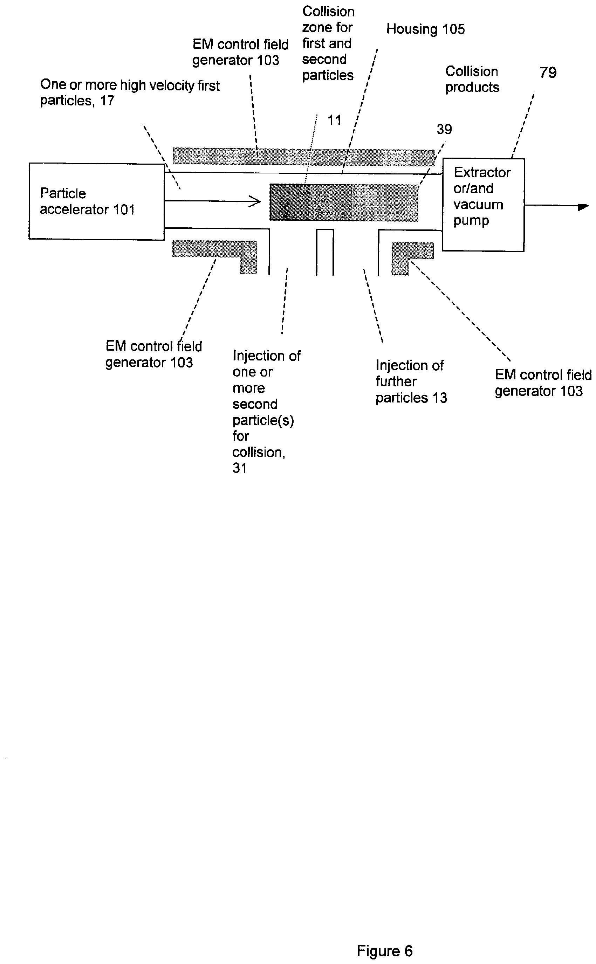

The remaining the steps for the destruction radioactive nuclei in one embodiment, and for the production of heat according to another embodiment are the same as those in the previous embodiment, and so will not be described in further detail. As in previous embodiment, a heat extractor 79 may be used in order to extract the hot reaction products and collision mass. As in previous embodiments, the hot extracted products may then be used or safely disposed of since they are no longer radioactive. In all embodiments, it is preferable to use a stream of a (carrier) gas 61 such as hydrogen, helium or other species which is inert at the high temperatures produced by collision may then be used to sweep the hot plasma and gas of the collision mass out of the collision zone to provide heat for industrial and other purposes. The carrier gas may be injected 61 so as to form streamlines 63 to as to act as barriers between the hot collision products and the walls of the apparatus (housing) 105. The streamlines allows controlled mixing 65 of the carrier gas and the products and collision mass(es) so that they further away from the walls of the housing. The carrier gas reduces the temperature of the collision products, particularly near the walls of the housing 105. The carrier gas helps to reduce corrosion of the walls of the housing and also reduces corrosion of any extraction equipment for extracting the hot collision mass and collision products. The carrier gas may also be added tangentially to form a vortex into which hot collision products are sucked and in which they are contained so as to prevent contact with the walls of the housing 105. The carrier gas 61 mixes 65 progressively with the hot gases of reaction in a streamlined flow 63 as it moves along the tube and reduces their temperature to a bulk temperature suitable for extraction by vacuum pumping apparatus 79. The carrier gas may be injected as streamlined flows immediately after the port through which the further light atomic species are injected for cooling , as shown in figures 6. There may also be an advantage in using at least a proportion of hydrogen in the carrier gas, because hydrogen is the most efficient neutron moderator if any neutrons escape the collision process. There is a possible additional operation after that to inject electrons by electrode to neutralize residual protons, and assist the formation of hydrogen gas.

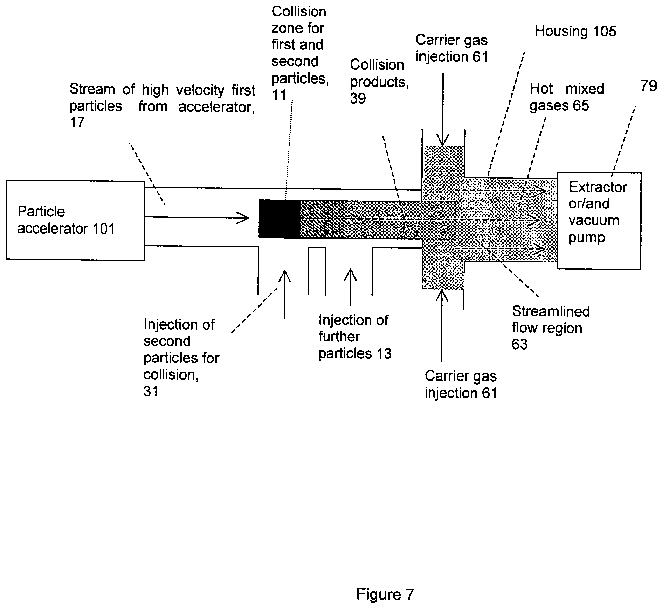

After the extraction/vacuum pump there are two possibilities as shown in figures 6 and 7.

In one embodiment, the hot output gases may be collected into a reservoir or used directly in other processes. If the carrier gas is hydrogen, this may be used to drive turbines and burnt as a fuel to complete the extraction of energy.

Alternatively, in a further embodiment, the hot output gas may be pumped through a heat exchanger 111 to extract heat, and then recycled and injected back into the process as carrier gas, as shown in figure 7. It may be particularly advantageous to use helium as carrier gas because it is less corrosive at high temperatures. An additional process would remove hydrogen from the recycled stream as the economics required.

The process of forming collision masses according to the embodiment by collision of opposing streams is not mutually exclusive. It may be advantageous to use the collision of opposing streams in the presence of a cloud of atomic species or plasma injected into the collision area at the appropriate time. Light atomic species are introduced into the reaction zone in which collisions have occurred or are still occurring while the temperatures in the collision masses are high enough to cause destruction of the light nuclei. The reaction chamber is the section of the collider in which collision takes place with additional ports as necessary for injection of light ions, atoms or molecules and exhaustion of products. The reaction chamber is equipped with electric and magnetic fields for stabilisation of the collision products to keep them in position. The kinetics of heat production depend on the statistical probabilities of collision followed by absorption from streams of light ions. In the absence of direct observation, which is a feature of all bulk nuclear reactions, the simplest method of control is by measuring the radioactivity of the output. Similarly the number of collision masses formed from opposing streams will be a small proportion of the number of ions in each stream. To generalize, processes which depend on statistical probabilities are most easily controlled by feedback from output to input, in this case from temperature to rates of flow of ions, atoms and molecules. This is comparable with the situation in industrial and laboratory chemical processes, where analysis of outputs is used to follow the progress of reactions. The extraction of the hot ion and gas output stream from the fusion process is by the technique similar to that used to connect storage rings and divert flows in accelerators. Any residual heavy ions can be separated by the same sort of magnetic field techniques used in mass spectrometry. Hot plasmas and gases may be cooled to temperatures suitable for engineering purposes by diluting with gases, the flow of which may be directed to keep the high temperature stream from the walls. Storage systems may be used to smooth the flow of output.

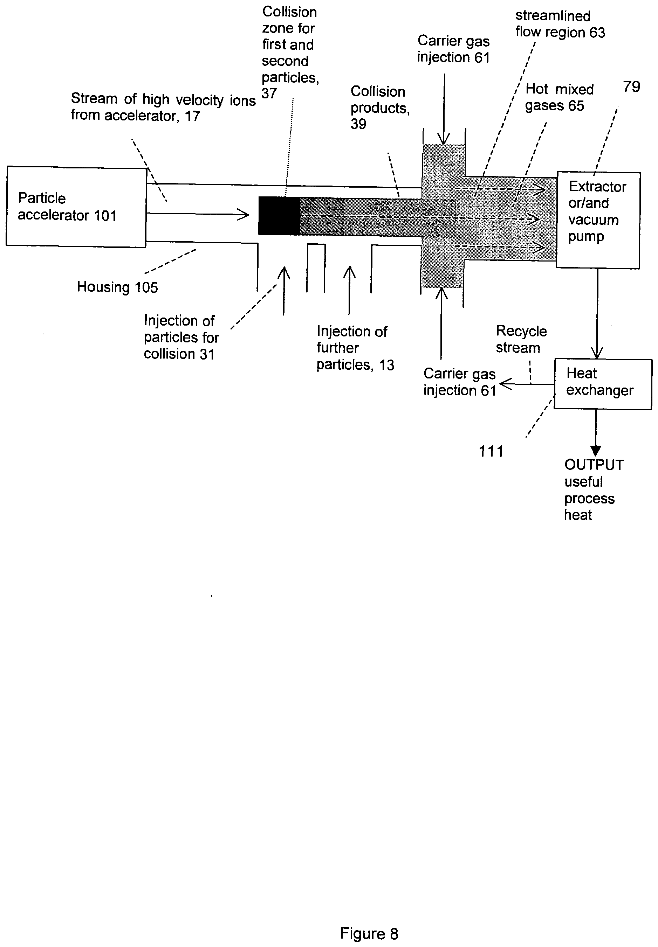

In a further embodiment, the further particles to undergo reduction of radioactivity in the collision mass, for example, light atomic species may also be accelerated using a particle accelerator or other device to a high velocity in the same direction as the first particles 81. The further particles or light ions can be accelerated using the same accelerator used for accelerating the first ion or ions used to form the collision mass. A mixed high velocity stream of concurrent ions for collision and further ions such as light ions for fusion are accelerated 81 in the accelerator. Alternatively, a separate particle accelerator can be used. This embodiment is illustrated in figure 8

When, for comparative example, the heavy ions collide with one or more second particle(s) 31, for example another heavy atomic species to form a collision mass, the light ion is then already present to be drawn into the collision mass destroying the nuclear structure of a radioactive particle. This embodiment has the advantage that precision timing is not needed in order to inject the further particles at the appropriate time. Preferably, both the first accelerated ion and the further particles or ions needed for the collision mass are stored in the same storage ring of the accelerator. This has the advantage that less capital investment is needed because fewer accelerators are required. Once a collision mass has been created, the steps for the reduction of radioactivity are the same as in previous embodiments, and so will not be described in further detail.

This principle also works with a stream containing a mixture of light ions.

Such mixtures may be readily formed by fractional electrolysis, distillation, diffusion or absorption or a succession of these processes. In a further embodiment, the process need not be continuous. It could be carried out in batches, but this is likely to be less economic. It is possible to keep heavy ions circulating in storage rings before injection into the collision zone. This may facilitate timing. Since the ions are destroyed by the collision, it may be advantageous to use a different species in each stream for economic purposes.

The schematic drawings show only the progress of successful collision masses through the system. Particles, for example heavy ions which do not collide, and atomic species which are sucked through by the extraction system can be readily separated for recycling into the process by use of their high velocity. Alternatively they may be recovered as raw material.

Preferably, in order that the process is economical, the first particles and second particles comprise streams of particles.

## Claims

1. A method for transforming radioactive material into less radioactive products comprising the steps of:
accelerating first particles comprising one or more neutrons, protons and electrons to a first velocity;
colliding the accelerated particles with second particles in a collision zone located within a housing causing the first particles and second particles to form one or more collision mass(es) comprising alpha particles and electrons or/and protons and electrons, and in which substantially all neutrons of the first or second particles are converted into alpha particles or/and protons and electrons as a result of one or more collisions, wherein any of the first or second particles, or fragments thereof, which have not completely disintegrated into alpha particles and/or protons and electrons are recycled back into the collision zone for further collisions;
controlling the position of the collision mass(es) with electric or/and magnetic fields; and
exhausting the collision mass from the housing wherein the collision mass comprises substantially only alpha particles or/and protons and electrons;
wherein the second particles are accelerated to a second velocity, and the first particles and second particles are collided such that the directions of their velocities are substantially opposite.

2. A method for transforming radioactive material into less radioactive products according to claim 1 further comprising the step of condensing the alpha particle(s) or/and proton(s) to form helium gas or/and hydrogen gas.

3. A method for transforming radioactive material into less radioactive products according to claim 1 in which the first or second particles comprise a mixed species of particles.

4. A method for transforming radioactive material into less radioactive products according to claim 1 further comprising the step of opening a portal if the fast moving particle detector detects a fast moving particle and in which the detector activates electromagnetic diversion means to divert the fast moving particle(s) to a particle storage ring.

5. A method for transforming radioactive material into less radioactive products according to claim 1 further comprising the step of opening a portal if the radioactive particle detector detects a radioactive particle and in which the detector activates electromagnetic diversion means to divert the radioactive particle(s) to a particle storage ring.

6. A method for transforming radioactive material into less radioactive products according to claims 4 or 5 in which one or more of the particles contained within the particle storage ring are diverted to the particle accelerator to be recollided with one or more second particle(s).

7. A method for transforming radioactive material into less radioactive products according to claim 1 further comprising the step of introducing one or more further particles into the collision mass(es) to cool the collision mass(es).

8. A method for transforming radioactive material into less radioactive products according to claim 7 in which the further particle(s) are accelerated to a velocity whose direction is substantially parallel to the direction of the velocity of the first particle(s), and in which the further particles preferably comprise mixed species of particles.

9. A method for transforming radioactive material into less radioactive products according to any preceding claim in which the first or second particle(s) comprises ion(s) or atom(s) of any one or more of gold, platinum, silver, iron, lead, plutonium or uranium or isotopes thereof.

10. A method for transforming radioactive material into less radioactive products according to claim 1 in which the further particles comprise light atomic species comprising any one or more ions, atoms, molecules or plasma of hydrogen, deuterium, tritium, lithium, beryllium, boron, carbon, nitrogen and oxygen.

11. A method for transforming radioactive material into less radioactive products according to claim 1 further comprising the step of injecting a carrier gas to mix with the collision mass products to reduce the temperature of the collision mass products, the carrier gas preferably injected such that the temperature in the vicinity of the walls of the housing is reduced.

12. A method for transforming radioactive material into less radioactive products according to claim 1 in which the further particles are introduced into the collision mass by injecting the further particles into the collision zone and in which the further particles are drawn into the collision mass by gravitational or electrostatic attraction or both.

13. Apparatus for transforming radioactive material into less radioactive products comprising:
an accelerator to accelerate first particles comprising one or more, neutrons, protons and electrons to a first velocity;
a collider to collide the accelerated particles with one or more second particles in a collision zone located within a housing causing the first particles and second particles to form one or more collision mass(es) comprising alpha particles and electrons or/and protons and electrons, and in which substantially all neutrons of the first or second particles are converted into alpha particles or/and protons and electrons as a result of one or more collisions, wherein any of the first or second particles, or fragments thereof, which have not completely disintegrated into alpha particles and/or protons and electrons are recycled back into the collision zone for further collisions;
electric or/and magnetic control field generator for generating fields for controlling the position of collision mass(es); and
an extractor to exhaust the collision mass from the housing wherein the collision mass comprises substantially only alpha particles or/and protons and electrons;
wherein the accelerator is configured to accelerate the second particles to a second velocity, and the collider is configured to collide the first particles and second particles such that the directions of their velocities are substantially opposite.

## Patentansprüche

1. Verfahren zur Umwandlung von radioaktivem Material in weniger radioaktive Produkte, das die folgenden Schritte aufweist:
Beschleunigen erster Teilchen, die ein oder mehr Neutronen, Protonen und Elektronen umfassen, auf eine erste Geschwindigkeit;
Kollidierenlassen der beschleunigten Teilchen mit zweiten Teilchen in einer in einem Gehäuse liegenden Kollisionszone, was die ersten Teilchen und die zweiten Teilchen zum Bilden von einer oder mehr Kollisionsmasse(n) veranlasst, die Alphateilchen und Elektronen oder/und Protonen und Elektronen aufweist bzw. aufweisen, und bei dem infolge von einer oder mehr Kollisionen im Wesentlichen alle Neutronen der ersten oder der zweiten Teilchen in Alphateilchen oder/und Protonen und Elektronen umgewandelt werden, wobei jedwedes der ersten oder zweiten Teilchen oder Bruchstücke davon, die nicht vollständig in Alphateilchen oder/und Protonen und Elektronen zersetzt wurden, für weitere Kollisionen in die Kollisionszone zurückgeführt werden;
Steuern der Position der Kollisionsmasse(n) mit elektrischen oder/und Magnetfeldern und
Extrahieren der Kollisionsmasse aus dem Gehäuse, wenn die Kollisionsmasse im Wesentlichen nur Alphateilchen oder/und Protonen und Elektronen aufweist;
wobei die zweiten Teilchen auf eine zweite Geschwindigkeit beschleunigt werden und die ersten Teilchen und die zweiten Teilchen so zur Kollision gebracht werden, dass die Richtungen ihrer Geschwindigkeit einander im Wesentlichen entgegengesetzt sind.

2. Verfahren zur Umwandlung von radioaktivem Material in weniger radioaktive Produkte nach Anspruch 1, das ferner den Schritt des Kondensierens des bzw. der Alphateilchen oder/und des Protons bzw. der Protonen zum Bilden von Heliumgas oder/und Wasserstoffgas aufweist.

3. Verfahren zur Umwandlung von radioaktivem Material in weniger radioaktive Produkte nach Anspruch 1, bei dem die ersten oder die zweiten Teilchen eine gemischte Teilchenspezies aufweisen.

4. Verfahren zur Umwandlung von radioaktivem Material in weniger radioaktive Produkte, das ferner den Schritt des Öffnens eines Tors aufweist, wenn der Detektor für sich schnell bewegende Teilchen ein sich schnell bewegendes Teilchen erfasst, und bei dem der Detektor ein elektromagnetisches Ablenkmittel zum Umlenken des bzw. der sich schnell bewegenden Teilchen(s) zu einem Teilchenspeicherring aufweist.

5. Verfahren zur Umwandlung von radioaktivem Material in weniger radioaktive Produkte nach Anspruch 1, das ferner den Schritt des Öffnens eines Tors aufweist, wenn der Detektor für radioaktive Teilchen ein radioaktives Teilchen erfasst, und bei dem der Detektor ein elektromagnetisches Ablenkmittel zum Umlenken des bzw. der radioaktiven Teilchen(s) zu einem Teilchenspeicherring aufweist.

6. Verfahren zur Umwandlung von radioaktivem Material in weniger radioaktive Produkte nach Anspruch 4 oder 5, bei dem eines oder mehr der in dem Teilchenspeicherring enthaltenen Teilchen zu dem Teilchenbeschleuniger umgelenkt werden, um mit einem oder mehr zweiten Teilchen erneut in Kollision gebracht zu werden.

7. Verfahren zur Umwandlung von radioaktivem Material in weniger radioaktive Produkte nach Anspruch 1, das ferner den Schritt des Einführens von einem oder mehr weiteren Teilchen in die Kollisionsmasse(n) zum Kühlen der Kollisionsmasse(n) aufweist.

8. Verfahren zur Umwandlung von radioaktivem Material in weniger radioaktive Produkte nach Anspruch 7, bei dem das bzw. die weitere(n) Teilchen auf eine Geschwindigkeit beschleunigt wird bzw. werden, deren Richtung im Wesentlichen parallel zur Richtung der Geschwindigkeit des bzw. der ersten Teilchen(s) ist, und bei dem die weiteren Teilchen vorzugsweise gemischte Teilchenspezies aufweisen.

9. Verfahren zur Umwandlung von radioaktivem Material in weniger radioaktive Produkte nach einem der vorhergehenden Ansprüche, bei dem das bzw. die erste(n) oder zweite(n) Teilchen (ein) Ion(en) oder Atom(e) von einem oder mehr von Gold, Platin, Silber, Eisen, Blei, Plutonium oder Uran oder Isotopen davon aufweist bzw. aufweisen.

10. Verfahren zur Umwandlung von radioaktivem Material in weniger radioaktive Produkte nach Anspruch 1, bei dem die weiteren Teilchen leichte Atomspezies aufweisen, die jedwedes von einem oder mehr Ionen, Atomen, Molekülen oder Plasma von Wasserstoff, Deuterium, Tritium, Lithium, Beryllium, Bor, Kohlenstoff, Stickstoff und Sauerstoff aufweisen.

11. Verfahren zur Umwandlung von radioaktivem Material in weniger radioaktive Produkte nach Anspruch 1, das ferner den Schritt des Einspritzens eines Trägergases zum Vermischen mit den Kollisionsmassenprodukten zum Senken der Temperatur der Kollisionsmassenprodukte aufweist, wobei das Trägergas vorzugsweise so eingespritzt wird, dass die Temperatur in der Nähe der Wände des Gehäuses gesenkt wird.

12. Verfahren zur Umwandlung von radioaktivem Material in weniger radioaktive Produkte nach Anspruch 1, bei dem die weiteren Teilchen durch Einspritzen der weiteren Teilchen in die Kollisionszone in die Kollisionsmasse eingeführt werden und bei dem die weiteren Teilchen durch Gravitation oder elektrostatische Anziehung oder beides in die Kollisionsmasse gezogen werden.

13. Vorrichtung zur Umwandlung von radioaktivem Material in weniger radioaktive Produkte nach Anspruch 1, die Folgendes aufweist:
einen Beschleuniger zum Beschleunigen erster Teilchen, die ein oder mehr Neutronen, Protonen und Elektronen umfassen, auf eine erste Geschwindigkeit;
einen Collider zum Kollidierenlassen der beschleunigten Teilchen mit einem oder mehr zweiten Teilchen in einer in einem Gehäuse liegenden Kollisionszone, was die ersten Teilchen und die zweiten Teilchen zum Bilden von einer oder mehr Kollisionsmasse(n) veranlasst, die Alphateilchen und Elektronen oder/und Protonen und Elektronen aufweist bzw. aufweisen, und bei dem infolge von einer oder mehr Kollisionen im Wesentlichen alle Neutronen der ersten oder der zweiten Teilchen in Alphateilchen oder/und Protonen und Elektronen umgewandelt werden, wobei jedwedes der ersten oder zweiten Teilchen oder Bruchstücke davon, die nicht vollständig in Alphateilchen oder/und Protonen und Elektronen zersetzt wurden, für weitere Kollisionen in die Kollisionszone zurückgeführt werden;
Generator elektrischer oder magnetischer Steuerfelder zum Steuern der Position der Kollisionsmasse(n) und
einen Extraktor zum Extrahieren der Kollisionsmasse aus dem Gehäuse, wobei die Kollisionsmasse im Wesentlichen nur Alphateilchen oder/und Protonen und Elektronen aufweist;
wobei der Beschleuniger zum Beschleunigen der zweiten Teilchen auf eine zweite Geschwindigkeit konfiguriert ist und der Collider zum Kollidierenlassen der ersten Teilchen und der zweiten Teilchen so, dass die Richtungen ihrer Geschwindigkeit einander im Wesentlichen entgegengesetzt sind, konfiguriert ist.

## Revendications

1. Procédé de transformation d'un matériau radioactif en des produits moins radioactifs comprenant les étapes consistant à :
accélérer des premières particules comprenant un ou plusieurs neutrons, protons et électrons à une première vitesse ;
faire entrer en collision les particules accélérées avec des deuxièmes particules dans une zone de collision située dans une chambre faisant que les premières particules et les deuxièmes particules forment une ou plusieurs masses de collision comprenant des particules alpha et des électrons ou/ou des protons et des électrons, et dans lesquelles sensiblement tous les neutrons des premières ou des deuxièmes particules sont convertis en des particules alpha ou/et des protons et des électrons comme un résultat d'une ou de plusieurs collisions, où n'importe lesquelles des premières ou deuxièmes particules, ou fragments de celles-ci, qui ne se sont pas complètement désintégrées en particules alpha et/ou protons et électrons sont recyclées de retour dans la zone de collision pour collisions ultérieures ;
contrôler la position de la masse/des masses de collision avec des champs électriques ou/et magnétiques ; et
évacuer la masse de collision de la chambre où la masse de collision ne comprend sensiblement que des particules alpha ou/et des protons et électrons ;
dans lequel les deuxièmes particules sont accélérées à une deuxième vitesse, et les premières particules et les deuxièmes particules entrent en collision de telle sorte que les directions de leurs vitesses sont sensiblement opposées.

2. Procédé de transformation d'un matériau radioactif en des produits moins radioactifs selon la revendication 1, comprenant en outre l'étape consistant à condenser la/les particules alpha ou/et le/les protons pour former du gaz hélium ou/et du gaz hydrogène.

3. Procédé de transformation d'un matériau radioactif en des produits moins radioactifs selon la revendication 1, dans lequel les premières ou deuxièmes particules comprennent une espèce mélangée de particules.

4. Procédé de transformation d'un matériau radioactif en des produits moins radioactifs selon la revendication 1, comprenant en outre l'étape consistant à ouvrir un portail si le détecteur de particules à déplacement rapide détecte une particule à déplacement rapide et dans lequel le détecteur active un moyen de déviation électromagnétique pour dévier la/les particules à déplacement rapide vers un anneau de stockage de particules.

5. Procédé de transformation d'un matériau radioactif en des produits moins radioactifs selon la revendication 1, comprenant en outre l'étape consistant à ouvrir un portail si le détecteur de particules radioactives détecte une particule radioactive et dans lequel le détecteur active un moyen de déviation électromagnétique pour dévier la/les particules radioactives vers un anneau de stockage de particules.

6. Procédé de transformation d'un matériau radioactif en des produits moins radioactifs selon les revendications 4 ou5, dans lequel une ou plusieurs des particules contenues à l'intérieur de l'anneau de stockage de particules sont déviées vers l'accélérateur de particules pour entrer de nouveau en collision avec une ou plusieurs deuxièmes particules.

7. Procédé de transformation d'un matériau radioactif en des produits moins radioactifs selon la revendication 1, comprenant en outre l'étape consistant à introduire une ou plusieurs particules supplémentaires dans la/les masses de collision pour refroidir la/les masses de collision.

8. Procédé de transformation d'un matériau radioactif en des produits moins radioactifs selon la revendication 7, dans lequel la/les particules supplémentaires sont accélérées à une vitesse dont la direction est sensiblement parallèle à la direction de la vitesse de la/des premières particules, et dans lequel les particules supplémentaires comprennent de préférence des espèces mélangées de particules.

9. Procédé de transformation d'un matériau radioactif en des produits moins radioactifs selon l'une quelconque des revendications précédentes, dans lequel la/les premières ou deuxièmes particules comprennent un/des ions ou atomes de l'un quelconque ou de plusieurs d'entre or, platine, argent, fer, plomb, plutonium ou uranium ou des isotopes de ceux-ci.

10. Procédé de transformation d'un matériau radioactif en des produits moins radioactifs selon la revendication 1, dans lequel les particules supplémentaires comprennent des espèces atomiques légères comprenant l'un quelconque ou plusieurs d'entre ions, atomes, molécules ou plasma d'hydrogène, deutérium, tritium, lithium, béryllium, bore, carbone, azote et oxygène.

11. Procédé de transformation d'un matériau radioactif en des produits moins radioactifs selon la revendication 1, comprenant en outre l'étape consistant à injecter un gaz porteur pour qu'il se mélange avec les produits de masse de collision afin de réduire la température des produits de masse de collision, le gaz porteur étant injecté de préférence de telle sorte que la température dans le voisinage des parois de la chambre est réduite.

12. Procédé de transformation d'un matériau radioactif en des produits moins radioactifs selon la revendication 1, dans lequel les particules supplémentaires sont introduites dans la masse de collision en injectant les particules supplémentaires dans la zone de collision et dans lequel les particules supplémentaires sont aspirées dans la masse de collision par attraction gravitationnelle ou électrostatique ou les deux.

13. Appareil de transformation d'un matériau radioactif en des produits moins radioactifs, comprenant :
un accélérateur pour accélérer des premières particules comprenant un ou plusieurs neutrons, protons et électrons à une première vitesse ;
un collisionneur pour faire entrer en collision les particules accélérées avec une ou plusieurs deuxièmes particules dans une zone de collision située dans une chambre faisant que les premières particules et les deuxièmes particules forment une ou plusieurs masses de collision comprenant des particules alpha et des électrons ou/et des protons et des électrons, et dans lequel sensiblement tous les neutrons des premières ou deuxièmes particules sont convertis en particules alpha ou/et protons et électrons comme un résultat d'une ou de plusieurs collisions, où n'importe lesquelles des premières ou deuxièmes particules, ou fragments de celles-ci, qui ne se sont pas complètement désintégrées en particules alpha et/ou protons et électrons sont recyclées de retour dans la zone de collision pour collisions ultérieures ;
un générateur de champs électriques ou/et magnétiques pour générer des champs pour contrôler la position de la/des masses de collision ; et
un extracteur pour évacuer la masse de collision de la chambre, où la masse de collision ne comprend sensiblement que des particules alpha ou/et des protons et électrons ;
dans lequel l'accélérateur est configuré pour accélérer les deuxièmes particules à une deuxième vitesse, et le collisionneur est configuré pour faire entrer en collision les premières particules et les deuxièmes particules de telle sorte que les directions de leurs vitesses sont sensiblement opposées.
